# FASCICULE DE BREVET EUROPEEN

(11) **EP 3 450 237 B1**
(45) Date de publication et mention de la délivrance du brevet: **24.02.2021**
(21) Numéro de dépôt: 18184895.3
(22) Date de dépôt: 23.07.2018
(51) Int. Cl.: B60K 15/04

(54) **ENSEMBLE D'ALIMENTATION DE RÉSERVOIRS DE FLUIDES ET PROCÉDÉ DE MONTAGE DE CET ENSEMBLE**
MONTAGEVERFAHREN EINER ZUFÜHRANORDNUNG ZU EINEM FLUIDTANK
METHOD FOR A MOUNTING FLUID TANK SUPPLY ASSEMBLY

(30) Priorité: 30.08.2017 FR 1757988
(43) Date de publication de la demande: 06.03.2019
(73) Titulaire: PSA Automobiles SA, 78300 Poissy (FR)
(72) Inventeur: HUREAUX, Sebastien, 70200 Magny Danigon (FR); DROIT, Julien, 70000 Vaivre et Montoille (FR); RAIS, Younese, 45300 Pithiviers (FR)

(56) Documents cités:
- EP-A1- 2 574 485
- FR-A1- 3 034 052
- JP-A- H10 271 646

## Description

L'invention se rapporte à un ensemble d'alimentation de réservoirs de fluides muni de goulottes de remplissage solidarisées et à un procédé de montage de cet ensemble.

L'invention concerne les réservoirs de fluides consommables dans un véhicule automobile, et plus particulièrement un réservoir de carburant et un réservoir d'agent réducteur pour un système de réduction catalytique dit SCR (acronyme de « selective catalytic réduction » en terminologie anglaise). La technologie SCR permet de respecter les normes de dépollution en vigueur, qui exigent un taux réduit d'émission des oxydes d'azote « NOX » proche de celui des moteurs à essence. Dans le cadre de cette technologie, une injection continue d'agent réducteur est effectuée dans la ligne d'échappement des NOX émis par le moteur et cette injection nécessite la mise en place d'un réservoir d'agent réducteur.

Chacun des réservoirs de carburant et d'agent réducteur dispose de sa propre tubulure reliée à une goulotte de remplissage. Chaque goulotte est agencée dans un endroit d'accès facile pour l'utilisateur du véhicule automobile, en général dans la trappe de remplissage placée sur une façade latérale de la carrosserie.

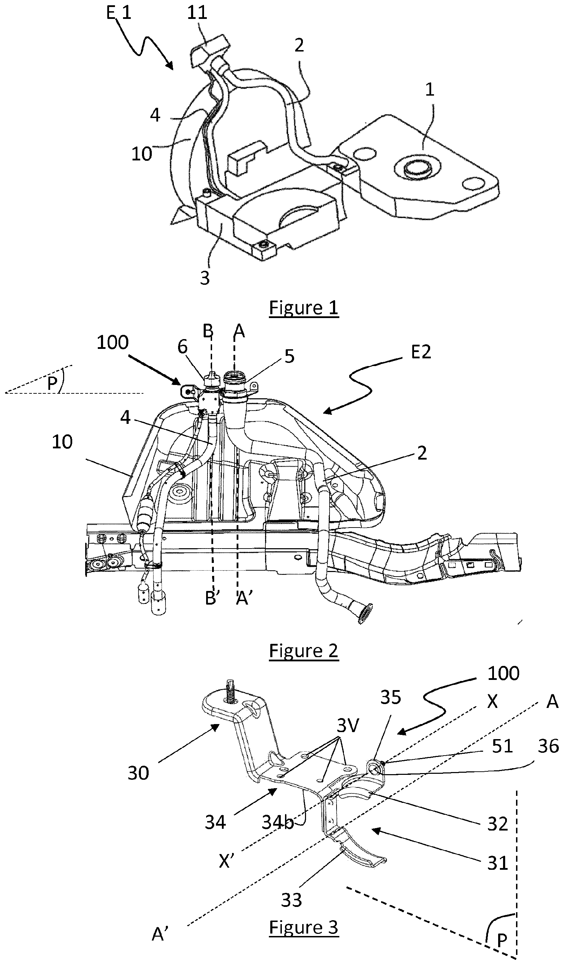

La figure 1 présente un exemple de réalisation d'un tel ensemble « E1 » à double réservoir. Sur cette figure 1, le réservoir de carburant 1 est relié à la trappe 11 via la tubulure 2, et le réservoir d'agent réducteur 3 est relié à la trappe 11 via la tubulure 4. La trappe 11 est placée sur un côté latéral de la carrosserie d'un véhicule automobile, au-dessus du coffrage 10 d'une roue arrière.

La trappe de remplissage de l'agent réducteur est en général intégrée à la trappe 11 de la goulotte de carburant, ou constitue une trappe voisine, car les normes anti-pollution devenant de plus en plus contraignantes, le réservoir d'agent réducteur doit être rempli de plus en plus fréquemment. Le réservoir d'agent réducteur 3 et sa tubulure 4 étant en général de plus petite taille que respectivement le réservoir 1 et à la tubulure 2 du carburant, la tubulure d'agent réducteur 4 est dimensionnée en conséquence. Pour éviter un risque de casse au cours de l'opération de montage de l'ensemble d'alimentation des réservoirs dans le véhicule automobile appelée coiffage, cette tubulure 4 est couplée à la tubulure 2 du carburant à l'endroit, situé à proximité de la trappe 11, où les deux tubulures 2 et 4 se rapprochent l'une de l'autre.

De nombreuses solutions ont contribué à améliorer cet ensemble de réservoirs et leur procédé de montage. Par exemple, le document FR 3 034 052, montrant le préambule de la revendication 1, décrit un ensemble de deux tubulures de réservoirs, dans lequel une goulotte de tubulure d'agent réducteur est reliée à la goulotte de carburant dans la zone de remplissage par une pince en « C », montée en force sur la goulotte de carburant. Ceci permet de faciliter la phase de coiffage de cet ensemble, sans risque d'affaissement sur elle-même ou de gauchissement de la goulotte d'agent réducteur qui présente la résistance mécanique la plus faible. Mais cette pince en « C » soutient de manière insuffisante la goulotte de plus faible résistance qui risque alors de riper ou de pivoter par rotation lors du coiffage. D'autres solutions proposent d'autres types de pinces de couplage, mais aucune d'entre elles n'apporte d'amélioration notable au maintien de la tubulure de l'agent réducteur au cours du coiffage, en particulier pour remédier à la rotation de la pince.

L'invention vise à s'affranchir de cet inconvénient et, pour ce faire, l'invention prévoit de supprimer le degré de liberté de rotation autour de la goulotte de plus faible résistance mécanique par une solidarisation de blocage entre les goulottes.

A cet effet, la présente invention a pour objet un procédé de montage des goulottes de carburant et d'agent SCR d'un ensemble d'alimentation de réservoirs de carburant et d'agent tel que l'ensemble d'alimentation comporte des tubulures reliant le premier réservoir de carburant à une première goulotte de remplissage et le deuxième réservoir d'agent SCR à une deuxième goulotte de remplissage, chaque goulotte étant équipée d'une patte de fixation sur une paroi interne de carrosserie d'un véhicule automobile, et une pièce support qui intègre la patte de fixation de la deuxième goulotte et relie la deuxième goulotte à la première goulotte par une pince formée de deux bras s'étendant autour de la première goulotte dans un plan perpendiculaire à cette première goulotte, la patte de fixation de la première goulotte étant dotée d'une oreille reliée à une extension formée sur un bras de la pince par des moyens de fixation, l'oreille et l'extension s'étendant dans le plan de la pince, ledit procédé étant tel qu'il comporte les étapes suivantes :- la deuxième goulotte d'agent SCR est fixée à la pièce support et la pince de cette pièce support est montée par écartement de ses bras sur un rétrécissement de la première goulotte de remplissage de carburant ;- l'extension du bras de la pince est positionnée en alignement avec une oreille de la patte de fixation de la première goulotte par rotation de la pince de sorte que des axes de solidarisation de l'extension et de l'oreille viennent en coïncidence, ledit procédé étant caractérisé en ce qu'il comporte l'étape suivante: - la pince est translatée le long de l'axe de la première goulotte jusqu'à ce que l'extension du bras de pince vienne contre l'oreille de la patte de fixation de la première goulotte pour être solidarisée à cette oreille par des moyens de fixation le long des axes de solidarisation.

Avantageusement, la deuxième goulotte peut avantageusement alimenter un agent réducteur pour un système de réduction catalytique SCR dans le cadre de l'invention.

Selon un autre avantage:
- les moyens de fixation solidaires de l'oreille et de l'extension en tant qu'éléments à solidariser peuvent comporter un pion cylindrique venant d'un élément dans un orifice de l'autre élément;
- la pièce support peut être en matériau choisi entre une tôle, un acier et un alliage métallique, en particulier un alliage d'aluminium ou de titane ;
- l'épaisseur de la tôle peut être comprise entre 1 mm et 3 mm ;
- le pion cylindrique peut être en matériau plastique ;
- la pince autour de la première goulotte peut être une pince en « C » qui se clipse en force sur le pourtour de la première goulotte.

Avantageusement, un véhicule automobile peut être équipé d'un ensemble d'alimentation d'au moins deux réservoirs de fluides consommables tel que défini ci-dessus.

Après la dernière étape du procédé de l'invention ci-dessus, l'ensemble d'alimentation de deux réservoirs est installé dans le véhicule automobile par une opération de coiffage.

Sur les figures, des éléments identiques ou analogues sont repérés par un même signe de référence qui renvoie au(x) passage(s) de la description qui le mentionne(nt).

D'autres données, caractéristiques et avantages de la présente invention apparaîtront à la lecture de la description non limitée qui suit, en référence aux figures annexées qui représentent, respectivement :
- la figure 1, un ensemble d'alimentation de réservoirs de fluides selon l'état de la technique (déjà commentée) ;
- la figure 2, la vue frontale d'un exemple d'ensemble d'alimentation de réservoirs de fluides selon l'invention ;
- la figure 3, une vue en perspective de la pièce support des goulottes;
- la figure 4, une vue en coupe de l'ensemble d'alimentation selon le plan « P » de la figure 2 ;
- la figure 5, une vue en coupe de l'ensemble d'alimentation selon le plan CC' de la figures 4 ; et
- la figure 6, un détail montrant, fixés par un pion, l'oreille de la patte de fixation de la première goulotte et l'extension formée sur un bras de la pince.

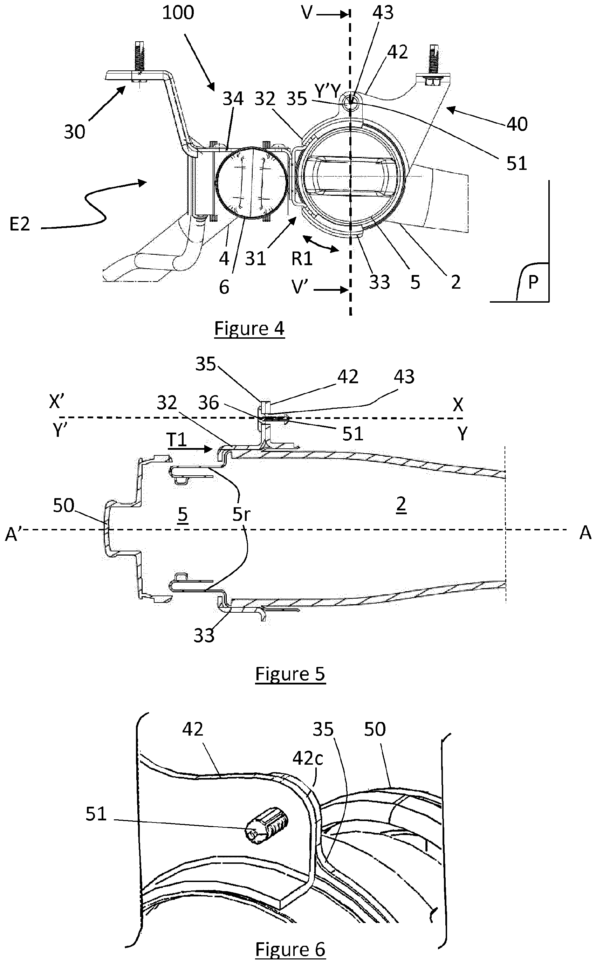

La figure 2 présente un exemple d'ensemble d'alimentation E2 selon l'invention comportant des goulottes de remplissage de carburant 5 et d'agent réducteur 6 du système de réduction catalytique SCR (ci-après « agent SCR »), ces goulottes 5 et 6 étant reliées ensemble par une pièce support 100 plus amplement détaillée en référence à la figure 3. Le plan « P », dans lequel s'étend globalement la pièce support 100, est perpendiculaire aux axes AA' et BB' des goulottes 5 et 6 et est le plan de coupe de la figure 4.

En référence à la figure 2, il apparaît que les goulottes de carburant 5 et d'agent SCR 6 sont prolongées par des tubulures respectivement 2 et 4 qui relient les goulottes 5 et 6 aux réservoirs correspondants (non représentés) le long du coffrage de roue arrière 10.

La pièce support 100 de profil en « W » comporte, telle qu'illustrée à la figure 3, une plaque de maintien 34 prolongée, d'un côté, par une patte de fixation 30 de la goulotte d'agent SCR 6 (cf. figure 2) sur une paroi interne de carrosserie (non visible) et, d'un côté opposé, par une pince en « C » 31 de fixation de la goulotte de carburant 5.

La plaque 34 présente des orifices 3V de passage de vis pour maintenir la goulotte d'agent SCR 6 sur la face inférieure 34b de cette plaque 34 et la pince 31 est formée de deux bras 32 et 33, et s'étend dans le plan « P » autour de la goulotte de carburant 5 (cf. figure 2) perpendiculairement à l'axe A'A de celle-ci, de sorte que l'axe de la pince 31 coïncide avec l'axe A'A. De plus, le bras 32 de la pince 31 présente sur une zone d'extrémité une extension en forme de langue plane 35, parallèle au plan « P ». En vue de la solidarisation des goulottes 5 et 6, l'extension 35 est munie d'un pion 51, d'axe X'X parallèle à l'axe A'A de la pince 31 (cet axe X'X étant également considéré ci-après comme l'axe de l'extension 35). Le pion 51 est monté sur un support circulaire 36 et est destiné à bloquer la pince 31, comme cela sera expliqué de manière détaillé ci-dessous.

La pièce support 100 est en tôle et son épaisseur peut varier de 1 mm à 3 mm entre sa patte de fixation 30, la plaque de maintien 34 et la pince 31. Dans cet exemple, les bras 32 et 33 de la pince en « C » 31 ont une épaisseur de 1 à 1,5 mm, et la plaque de maintien 34 une épaisseur de 2 mm.

La figure 4 présente une vue en coupe de l'ensemble d'alimentation E2 selon le plan P de la figure 2. La goulotte d'agent SCR 6 est montée sur la plaque 34 de la pièce support 100 et est équipée (respectivement la goulotte de carburant 5) de la patte 30 (respectivement de la patte 40) de fixation sur des parois internes de la carrosserie du véhicule automobile (non représentées). De plus, la patte de fixation 40 est munie d'une oreille 42 dotée d'un orifice 43 que traverse en force le pion 51 de l'extension 35 formée en extrémité du bras 32 de la pince 31. Les axes dits de solidarisation X'X et Y'Y, respectivement du pion 51 et de l'orifice 43, viennent alors en coïncidence.

Dans ces conditions, les tubulures 2 et 4 des goulottes 5 et 6 sont bien solidarisées entre elles avant l'opération de coiffage, par blocage des degrés de liberté de mouvement de la pince en « C » 31 que ce soit dans le plan « P » et/ou selon un axe A'A (cf. figures 3 ou 5) perpendiculaire à ce plan. Les risques d'affaissement ou de casse de la tubulure d'agent SCR 6, la plus fragile des deux tubulures, sont ainsi supprimés.

La figure 5 présente une vue en coupe de l'ensemble d'alimentation E2 selon le plan V-V' de la figure 4. Le plan V-V' contient l'axe A'A de la goulotte de carburant 5 et traverse l'extension 35 du bras 32, l'oreille 42 de la patte de fixation 40 (cf. figure 4), le pion 51 de l'extension 35 et son support circulaire 36. La goulotte de carburant 5 est présentée en coupe, avec son bouchon 50 et son début de tubulure 2. Les deux bras 32 et 33 de la pince en « C » 31 enserrent la goulotte 5 et le pion 51 de l'extension 35 est inséré en force dans l'orifice 43 de l'oreille 42. Avantageusement le pion 51 est également collé dans l'orifice 43 pour renforcer sa liaison avec l'oreille 42.

Plus précisément, la vue de la figure 6 présente en perspective le détail de la liaison entre l'oreille 42 et le pion 51. Sur cette figure, il apparaît que l'extension 35 du bras de pince 32 (cf. figure 5) épouse la portion de contour circulaire 42c de l'oreille 42 et que le pion 51 est centré sur cette portion de contour circulaire 42c.

Par ailleurs, le montage des goulottes de carburant 5 et d'agent SCR 6 de cet exemple d'ensemble d'alimentation peut être mis en œuvre selon les étapes suivantes, en référence aux figures 4 et 5.

La goulotte d'agent SCR 6 est fixée à la plaque 34 de la pièce support 100 et la pince 31 de cette pièce support 100 est montée par écartement de ses bras 32, 33 sur un rétrécissement 5r (figure 5) de la goulotte de carburant 5.

Puis, par rotation (flèche double R1, figure 4) de la pince 31 dans le rétrécissement 5r, l'axe X'X de l'extension de bras 35 est amenée en alignement et donc en coïncidence=avec l'axe Y'Y de l'orifice 43 de l'oreille 42 de la patte de fixation 40 de la goulotte de carburant 5.

La pince est alors translatée (flèche T1, figure 5) le long de l'axe A'A de la goulotte de carburant 5, jusqu'à ce que l'extension 35 du bras de pince 32 vienne contre l'oreille 42 pour être solidarisée à cette oreille 42 par le pion 51 le long des axes dits de solidarisation X'X et Y'Y en coïncidence.

L'invention n'est pas limitée aux exemples de réalisation décrits et représentés. Ainsi elle peut concerner plus de deux réservoirs. La plaque support de la goulotte d'agent réducteur peut être plate ou semi-cylindrique pour adopter la forme de cette goulotte.

En outre, les moyens de fixation solidaires de l'oreille et de l'extension en tant qu'éléments à solidariser peuvent être, outre le pion et l'orifice, un moyen de clipsage d'un élément dans un orifice de l'autre élément, une vis et des taraudages formés dans des orifices formés dans les éléments, un boulon traversant des orifices formés dans les éléments, ou des moyens équivalents.

Par ailleurs, la pince autour de la première goulotte présente une charnière qui se referme avec un moyen de verrouillage sur le pourtour complet de la première goulotte.

## Revendications

1. Procédé de montage des goulottes (5, 6) de carburant et d'agent SCR d'un ensemble d'alimentation (E2) de réservoirs de carburant et d'agent SCR tel que l'ensemble d'alimentation (E2) comporte des tubulures (2, 4) reliant le premier réservoir de carburant (1) à une première goulotte de remplissage (5) et le deuxième réservoir d'agent SCR (3) à une deuxième goulotte de remplissage (6), chaque goulotte (5, 6) étant équipée d'une patte de fixation (30, 40) sur une paroi interne de carrosserie d'un véhicule automobile, et une pièce support (100) qui intègre la patte de fixation (30) de la deuxième goulotte (6) et relie la deuxième goulotte (6) à la première goulotte (5) par une pince (31) formée de deux bras (32, 33) s'étendant autour de la première goulotte (5) dans un plan perpendiculaire (P) à cette première goulotte (5), la patte de fixation (40) de la première goulotte (5) étant dotée d'une oreille (42) reliée à une extension (35) formée sur un bras (32) de la pince (31) par des moyens de fixation (51), l'oreille (42) et l'extension (35) s'étendant dans le plan (P) de la pince (31), ledit procédé étant tel qu'il comporte les étapes suivantes :
- la deuxième goulotte d'agent SCR (6) est fixée à la pièce support (100) et la pince (31) de cette pièce support (100) est montée par écartement de ses bras (32, 33) sur un rétrécissement (5r) de la première goulotte de remplissage (5) de carburant ;
- l'extension (35) du bras (32) de la pince (31) est positionnée en alignement avec une oreille (42) de la patte de fixation (40) de la première goulotte (5) par rotation (R1) de la pince (31) de sorte que des axes de solidarisation (X'X, Y'Y) de l'extension (35) et de l'oreille (42) viennent en coïncidence, ledit procédé étant **caractérisé en ce qu'**il comporte l'étape suivante:
- la pince (31) est translatée le long de l'axe de la première goulotte (5) jusqu'à ce que l'extension (35) du bras (32) de pince (31) vienne contre l'oreille (42) de la patte de fixation (40) de la première goulotte (5) pour être solidarisée à cette oreille (42) par des moyens de fixation (51) le long des axes de solidarisation (X'X, Y'Y).

2. Procédé de montage selon la revendication précédente, dans lequel l'ensemble d'alimentation (E2) est installé dans le véhicule automobile par une opération de coiffage.

## Patentansprüche

1. Verfahren zur Montage der Kraftstoff- und SCR-Mittelrutschen (5, 6) einer Versorgungsbaugruppe (E2) aus Kraftstofftanks und SCR-Mittel derart, dass die Versorgungsanordnung (E2) Rohre (2, 4) umfasst, die den ersten Kraftstofftank (1) mit einem ersten Einfüllstutzen (5) und den zweiten Tank des SCR-Mittels (3) mit a verbinden zweite Füllrutsche (6), wobei jede Rutsche (5, 6) mit einer Befestigungsöse (30, 40) an einer inneren Karosseriewand eines Kraftfahrzeugs und einem Stützteil (100) ausgestattet ist, das die Befestigungsnase (30) der zweiten Rutsche (6) und verbindet die zweite Rutsche (6) mit der ersten Rutsche (5) durch eine Klemme (31), die aus zwei Armen (32, 33) besteht, die sich um die erste erstrecken Rutsche (5) in einer senkrechten Ebene **(P)** zu dieser ersten Rutsche (5) ist die Befestigungslasche (40) der ersten Rutsche (5) mit einem Ohr (42) versehen, das mit einer Verlängerung (35) verbunden ist, die an einem Arm (32) der Klemme (31) ausgebildet ist.) durch Befestigungsmittel (51), wobei sich das Ohr (42) und die Verlängerung (35) in der Ebene (P) der Klammer (31) erstrecken, wobei das Verfahren derart ist, dass es die Stufen umfasst Folgendes :
- Die zweite SCR-Mittelrutsche (6) ist am Stützteil (100) befestigt, und die Klemme (31) dieses Stützteils (100) ist durch Abstand ihrer Arme (32, 33) an einer Verengung (5r) montiert) den ersten Kraftstoffeinfüllstutzen (5) ;
- Die Verlängerung (35) des Arms (32) der Klemme (31) ist durch Drehen (R1) des Ohrs (42) der Befestigungsöse (40) der ersten Rutsche (5) ausgerichtet Klemme (31) so, dass die Sicherungsachsen (X'X, Y'Y) der Verlängerung (35) und des Ohrs (42) fallen zusammen, wobei das Verfahren **dadurch gekennzeichnet ist, dass** es den folgenden Schritt umfasst:
- Die Klammer (31) ist entlang der Achse der ersten Rutsche (5) verschoben. bis die Verlängerung (35) des Arms (32) der Klemme (31) gegen das Ohr (42) der Befestigungsöse (40) der ersten Rutsche (5) stößt, die an diesem Ohr befestigt werden soll (42) durch Befestigungsmittel (51) entlang der Sicherungsachsen (X'X, Y'Y).

2. Montageverfahren nach dem vorhergehenden Anspruch, bei dem die Versorgungsbaugruppe (E2) durch einen Styling-Vorgang in das Kraftfahrzeug eingebaut wird.

## Claims

1. Method of mounting the fuel and SCR agent chutes (5, 6) of a supply assembly (E2) of fuel tanks and SCR agent such that the supply assembly (E2) comprises pipes (2, 4) connecting the first fuel tank (1) to a first filler neck (5) and the second tank of SCR agent (3) to a second filling chute (6), each chute (5, 6) being equipped with a fixing lug (30, 40) on an internal body wall of a motor vehicle, and a support part (100) which integrates the fixing lug (30) of the second chute (6) and connects the second chute (6) to the first chute (5) by a clamp (31) formed of two arms (32, 33) extending around the first chute (5) in a perpendicular plane **(P)** to this first chute (5), the fixing tab (40) of the first chute (5) being provided with an ear (42) connected to an extension (35) formed on an arm (32) of the clamp (31) by fixing means (51), the ear (42) and the extension (35) extending in the plane (P) of the clamp (31), said method being such that it comprises the steps following :
- the second SCR agent chute (6) is fixed to the support part (100) and the clamp (31) of this support part (100) is mounted by spacing its arms (32, 33) on a constriction (5r) the first fuel filler neck (5) ;
- the extension (35) of the arm (32) of the clamp (31) is positioned in alignment with an ear (42) of the fixing lug (40) of the first chute (5) by rotation (R1) of the clamp (31) so that the securing axes (X'X, Y'Y) of the extension (35) and the ear (42) come into coincidence, said method being **characterized in that** it comprises the following step :
- the clamp (31) is translated along the axis of the first chute (5)
until the extension (35) of the arm (32) of the clamp (31) comes against the ear (42) of the fixing lug (40) of the first chute (5) to be secured to this ear (42) by fixing means (51) along the securing axes (X'X, Y'Y).

2. Mounting method according to the preceding claim, in which the supply assembly (E2) is installed in the motor vehicle by a capping operation.
